# EUROPÄISCHE PATENTSCHRIFT

(11) **EP 1 911 114 B1**
(45) Veröffentlichungstag und Bekanntmachung des Hinweises auf die Patenterteilung: **02.05.2012**
(21) Anmeldenummer: 06805921.1
(22) Anmeldetag: 28.09.2006
(51) Int. Cl.: H01M 8/02, H01M 8/24

(54) **DICHTUNGSANORDNUNG MIT SILBERBASISLOT FÜR EINE HOCHTEMPERATURBRENNSTOFFZELLE UND VERFAHREN ZUM HERSTELLEN EINES BRENNSTOFFZELLENSTAPELS**
SEALING ARRANGEMENT WITH SILVER-BASED SOLDER FOR A HIGH-TEMPERATURE FUEL CELL AND METHOD OF PRODUCING A FUEL CELL STACK
SYSTEME D'ETANCHEITE COMPRENANT UN MATERIAU DE BRASAGE A BASE D'ARGENT POUR UNE PILE A COMBUSTIBLE HAUTE TEMPERATURE ET PROCEDE DE PRODUCTION D'UN EMPILEMENT DE PILES A COMBUSTIBLE

(30) Priorität: 29.09.2005 DE 102005048213
(43) Veröffentlichungstag der Anmeldung: 16.04.2008
(60) Teilanmeldung: 08002236.1
(73) Patentinhaber: ElringKlinger AG, 72581 Dettingen (DE)
(72) Erfinder: ZERFASS, Hans-Rainer, 65232 Taunusstein (DE); DIEZ, Armin, 73252 Lenningen (DE); SCHENK, Peter, 72531 Hohenstein (DE); FRITZ, Wolfgang, 72555 Metzingen (DE)
(74) Vertreter: Hoeger, Stellrecht & Partner Patentanwälte
(86) Internationale Anmeldenummer: PCT/EP2006/009415
(87) Internationale Veröffentlichungsnummer: WO 2007/036361

(56) Entgegenhaltungen:
- EP-A- 1 662 596
- DE-A1- 10 358 457
- DE-A1-102004 048 525
- US-A1- 2003 132 270
- US-A1- 2004 060 967
- "Joining ceramic and metal - using mixt. of copper oxide and silver or silver-copper alloy as insertion used material" DERWENT, 22. Mai 1985 (1985-05-22), XP002237581

## Beschreibung

Die vorliegende Erfindung betrifft eine Dichtungsanordnung für einen Brennstoffzellenstapel, der mehrere Brennstoffzelleneinheiten umfasst, welche längs einer Stapelrichtung aufeinanderfolgen, wobei jede der Brennstoffzelleneinheiten ein Gehäuse mit mindestens einem Gehäuseteil aus einem metallischen Material umfasst.

Zur Einstellung der gewünschten Betriebsspannung werden Brennstoffzelleneinheiten in der benötigten Anzahl aufeinander angeordnet, um so einen Brennstoffzellenstapel (Brennstoffzellenstack) zu erhalten. Um einen elektrischen Kurzschluss zu verhindern, müssen die Gehäuse von in dem Brennstoffzellenstapel aufeinanderfolgenden Brennstoffzelleneinheiten elektrisch voneinander isoliert werden. Außerdem ist es erforderlich, die Brenngaskanäle des Brennstoffzellenstapels gasdicht von den Oxidationsmittelräumen der Brennstoffzelleneinheiten und die Oxidationsmittelkanäle des Brennstoffzellenstapels gasdicht von den Brenngasräumen der Brennstoffzelleneinheiten zu trennen.

Bei bekannten Brennstoffzellenstapeln werden Dicht- und Isolationselemente aus Glaslot oder aus keramischen Dichtmaterialien verwendet, um die erforderliche elektrische Isolationswirkung und die erforderliche Abdichtwirkung zu erzielen.

Bei einigen der üblicherweise verwendeten Dichtungsmaterialien ist der elektrische Widerstand bei der Betriebstemperatur einer Hochtemperatur-Brennstoffzelleneinheit (im Bereich von ungefähr 800 °C bis ungefähr 900 °C) nicht mehr ausreichend hoch, um eine zufriedenstellende Isolationswirkung zu erzielen. Ferner weisen einige der üblicherweise verwendeten Dichtungsmaterialien nur eine geringe Beständigkeit gegenüber den bei einer Hochtemperatur-Brennstoffzelleneinheit häufig auftretenden Temperaturwechseln (zwischen Betriebs- und Ruhephasen) auf.

Die US 2004/060967 A1 offenbart eine Dichtungsanordnung gemäß dem Oberbegriff von Anspruch 1, wobei ein metallisches Bauteil eine keramische Oberfläche aufweist, die durch Oxidation eines oxidierbaren Bestandteils (Aluminium) des metallischen Bauteils erzeugt ist, und dieses Bauteil mittels eines Cu/Ag-Lotes mit einem anderen Bauteil verlötet ist.

Die DE 103 58 457 A1 offenbart eine Dichtungsanordnung für einen Brerinstoffzellenstapel, welche eine durch Oxidation von Aluminium aus der metallischen Legierung eines Grundkörpers erzeugte Aluminiumoxidschicht und ein aus einer keramischen Dichtmasse gebildetes ringförmiges Dichtelement umfasst.

Die US 2003/132270 A1 offenbart die Verlötung eines metallischen Bauteils einer Hochtemperatur-Brennstoffzelle, welches eine durch Oxidation eines oxidierbaren Bestandteils des metallischen Bauteils gebildete Aluminiumoxid-Oberfläche aufweist, mit einem anderen Bauteil mittels eines Ag/CuO-Lotes.

Der vorliegenden Erfindung liegt die Aufgabe zugrunde, eine Dichtungsanordnung für einen Brennstoffzellenstapel der eingangs genannten Art zu schaffen, welche auch bei einer hohen Betriebstemperatur des Brennstoffzellenstapels eine ausreichende elektrische Isolationswirkung und eine ausreichende mechanische Festigkeit aufweist.

Diese Aufgabe wird durch eine Dichtungsanordnung nach Anspruch 1 gelöst.

Bei der erfindungsgemäßen Lösung wird das Gehäuseteil der ersten Brennstoffzelleneinheit direkt, ohne ein dazwischen angeordnetes separates Zwischenelement, mit dem Gehäuseteil der zweiten Brennstoffzelleneinheit verlötet. Hierdurch wird ein besonders einfacher Aufbau des Brennstoffzellenstapels erzielt.

Das metallische Lot ist bei der Betriebstemperatur des Brennstoffzellenstapels fest.

Das Gehäuseteil der zweiten Brennstoffzelleneinheit, mit welchem das mit der Keramikbeschichtung versehene Gehäuseteil der ersten Brennstoffzelleneinheit verlötet wird, ist vorzugsweise ebenfalls aus einem metallischen Material gebildet.

Auch das Gehäuseteil der zweiten Brennstoffzelleneinheit, mit welchem das mit der Keramikbeschichtung versehene Gehäuseteil der ersten Brennstoffzelleneinheit verlötet ist, kann mit einer elektrisch isolierenden Keramikbeschichtung versehen sein.

Grundsätzlich genügt es jedoch, wenn eines der durch die Lötung miteinander verbundenen Gehäuseteile eine solche elektrisch isolierende Keramikbeschichtung aufweist, um die elektrische Isolationswirkung der Dichtungsanordnung zu gewährleisten.

Die Keramikbeschichtung ist aus einem keramischen Material gebildet, das bei der Betriebstemperatur des Brennstoffzellenstapels eine elektrische Isolationswirkung aufweist, so dass die elektrische Isolation von in dem Brennstoffzellenstapel aufeinanderfolgenden Brennstoffzelleneinheiten durch diese Keramikbeschichtung gewährleistet ist.

Da die elektrische Isolierung bereits durch die Keramikbeschichtung erreicht wird, kann für die mechanische Verbindung der Gehäuse aufeinanderfolgender Brennstoffzelleneinheiten und für die Abdichtung der Fluidkanäle statt eines Glaslotes oder eines keramischen Dichtmaterials ein metallisches Lot verwendet werden, welches eine hohe Temperaturbeständigkeit und eine hohe Temperaturwechselbeanspruchbarkeit aufweist.

Außerdem erlaubt es das erfindungsgemäße Konzept, in einfacher Weise eine haltbare Verbindung zwischen den Gehäusen von in der Stapelrichtung aufeinanderfolgenden Brennstoffzelleneinheiten zu schaffen, so dass der Aufbau des Brennstoffzellenstapels durch sukzessives Aneinanderfügen der Brennstoffzelleneinheiten besonders einfach und rasch erfolgen kann.

Bei einer bevorzugten Ausgestaltung der Erfindung ist vorgesehen, dass das Gehäuseteil der ersten Brennstoffizelleneinheit mindestens eine Brenngasdurchtrittsöffnung aufweist.

Alternativ oder ergänzend hierzu kann vorgesehen sein, dass das Gehäuseteil der ersten Brennstoffzelleneinheit mindestens eine Oxidationsmitteldurchtrittsöffnung aufweist.

Ferner kann vorgesehen sein, dass das Gehäuseteil der ersten Brennstoffzelleneinheit mindestens eine Durchtrittsöffnung aufweist, durch welche im montierten Zustand des Brennstoffzellenstapels eine Kathoden-Elektrolyt-Anoden-Einheit der ersten Brennstoffzelleneinheit für eine elektrische Kontaktierung durch eine andere Brennstoffzelleneinheit des Brennstoffzellenstapels zugänglich ist.

Alternativ oder ergänzend hierzu kann auch vorgesehen sein, dass das Gehäuseteil der ersten Brennstoffzelleneinheit mindestens ein Kontaktelement zur elektrischen Kontaktierung einer benachbarten Kathoden-Elektrolyt-Anoden-Einheit aufweist.

Ferner kann vorgesehen sein, dass an dem Gehäuseteil der ersten Brennstoffzelleneinheit eine Kathoden-Elektrolyt-Anoden-Einheit der Brennstoffzelleneinheit, entweder direkt oder über ein Substrat der Kathoden-Elektrolyt-Anoden-Einheit, festgelegt ist, beispielsweise durch Verlötung und/oder durch Verschweißung.

Die Herstellung des Gehäuseteils der ersten Brennstoffzelleneinheit gestaltet sich besonders einfach, wenn das Gehäuseteil aus einem Metallblech gebildet ist.

Vorzugsweise ist vorgesehen, dass das Gehäuseteil der ersten Brennstoffzelleneinheit aus einem hochkorrosionsfesten Stahl gebildet ist. Dadurch wird eine ausreichende Korrosionsbeständigkeit des Gehäuseteils auch bei der hohen Betriebstemperatur einer SOFC (Solid Oxide Fuel Cell)-Brennstoffzelleneinheit erzielt.

Besonders günstig ist es, wenn als Material für das Gehäuseteil der korrosionsbeständige Stahl verwendet wird, der unter dem Handelsnamen "Aluchrom Y" oder auch "FeCrAlY" kommerziell erhältlich ist.

Grundsätzlich kann die Keramikbeschichtung aus jedem keramischen Material gebildet werden, welches bei der Betriebstemperatur des Brennstoffzellenstapels einen ausreichend hohen spezifischen elektrischen Widerstand aufweist.

Besonders geeignet sind solche Keramikbeschichtungen, welche Aluminiumoxid und/oder Titandioxid und/oder Zirkoniumdioxid und/oder Magnesiumoxid umfassen.

Die Keramikbeschichtung ist durch thermisches Spritzen, insbesondere durch atmosphärisches Plasmaspritzen, durch Vakuumplasmaspritzen oder durch Flammspritzen, erzeugt.

Bei einer besonderen Ausgestaltung der erfindungsgemäßen Dichtungsanordnung ist vorgesehen, dass das Gehäuseteil der ersten Brennstoffzelleneinheit aus einer metallischen Legierung gebildet ist, welche einen oxidierbaren Bestandteil enthält.

Insbesondere kann vorgesehen sein, dass die metallische Legierung Aluminium und/oder Zirkonium als oxidierbaren Bestandteil enthält.

Vorzugsweise weist die Keramikbeschichtung eine Dicke von ungefähr 20 µm bis ungefähr 1000 µm auf.

Für die Verlötung der Keramikbeschichtung des Gehäuseteils der ersten Brennstoffzelleneinheit mit dem Gehäuseteil der zweiten Brennstoffzelleneinheit wird ein Silberbasislot ohne Zusatz von Kupfer verwendet.

Da das Silberbasislot ohne Kupferzusatz verwendet wird, ist es günstig, wenn das Silberbasislot einen Zusatz von Kupferoxid enthält, da durch den Zusatz von Kupferoxid das Silberbasislot Keramikoberflächen besser benetzt.

Ferner kann das Silberbasislot einen Titanzusatz zur Verbesserung der Benetzung umfassen.

Das für die Verlötung der Keramikbeschichtung des Gehäuseteils der ersten Brennstoffzelleneinheit mit dem Gehäuseteil der zweiten Brennstoffzelleneinheit verwendete Lot wird aus einem innigen Gemenge der Komponenten hergestellt, aus welchem sich erst bei der Erwärmung auf die Löttemperatur in situ die Lotlegierung bildet.

Die mindestens eine Stelle des Gehäuseteils der zweiten Brennstoffzelleneinheit, an welcher das Gehäuseteil der zweiten Brennstoffzelleneinheit mit dem Gehäuseteil der ersten Brennstoffzelleneinheit verlötet ist, kann ebenfalls mit einer elektrisch isolierenden Keramikbeschichtung versehen sein. Da die elektrische Isolation zwischen den Gehäusen der aufeinanderfolgenden Brennstoffzelleneinheiten jedoch bereits durch die Keramikbeschichtung des Gehäuseteils der ersten Brennstoffzelleneinheit gewährleistet ist, ist eine solche Keramikbeschichtung des Gehäuseteils der zweiten Brennstoffzelleneinheit nicht zwingend erforderlich.

Bei der Erfindung ist vorgesehen, dass das mit der Keramikbeschichtung versehene Gehäuseteil der ersten Brennstoffzelleneinheit an einem zweiten Gehäuseteil der ersten Brennstoffzelleneinheit, also derselben Brennstoffzelleneinheit, festgelegt ist.

Insbesondere kann vorgesehen sein, dass das mit der Keramikbeschichtung versehene Gehäuseteil der ersten Brennstoffzelleneinheit mit dem zweiten Gehäuseteil der ersten Brennstoffzelleneinheit verschweißt und/oder verlötet ist. Auf diese Weise wird eine besonders haltbare und rasch und einfach herstellbare Verbindung zwischen den Gehäuseteilen der ersten Brennstoffzelleneinheit erzielt.

Die Anzahl der für die Herstellung des Brennstoffzellenstapels erforderlichen Bauelemente wird dadurch reduziert, dass das zweite Gehäuseteil der ersten Brennstoffzelleneinheit im wesentlichen die gleiche Gestalt aufweist wie das Gehäuseteil der zweiten Brennstoffzelleneinheit, mit welchem das mit der Keramikbeschichtung versehene Gehäuseteil der ersten Brennstoffzelleneinheit verlötet ist.

Das zweite Gehäuseteil der ersten Brennstoffzelleneinheit kann insbesondere mindestens eine Brenngasdurchtrittsöffnung aufweisen.

Alternativ oder ergänzend hierzu kann vorgesehen sein, dass das zweite Gehäuseteil der ersten Brennstoffzelleneinheit mindestens eine Oxidationsmitteldurchtrittsöffnung aufweist.

Ferner kann das zweite Gehäuseteil der ersten Brennstoffzelleneinheit mindestens ein Kontaktelement zur elektrischen Kontaktierung einer benachbarten Kathoden-Elektrolyt-Anoden-Einheit aufweisen.

Alternativ oder ergänzend hierzu kann auch vorgesehen sein, dass das zweite Gehäuseteil der ersten Brennstoffzelleneinheit mindestens eine Durchtrittsöffnung aufweist, durch welche im montierten Zustand des Brennstoffzellenstapels eine Kathoden-Elektrolyt-Anoden-Einheit der ersten Brennstoffzelleneinheit für eine elektrische Kontaktierung durch eine andere Brennstoffzelleneinheit des Brennstoffzellenstapels zugänglich ist.

Ferner kann vorgesehen sein, dass an dem zweiten Gehäuseteil der ersten Brennstoffzelleneinheit eine Kathoden-Elektrolyt-Anoden-Einheit der Brennstoffzelleneinheit, entweder direkt oder über ein Substrat der Kathoden-Elektrolyt-Anoden-Einheit, festgelegt ist, beispielsweise durch Verlötung und/oder durch Verschweißung.

Bei einer bevorzugten Ausgestaltung der Erfindung ist vorgesehen, dass das mit der Keramikbeschichtung versehene erste Gehäuseteil der ersten Brennstoffzelleneinheit und das mit diesem Gehäuseteil verbundene zweite Gehäuseteil der ersten Brennstoffzelleneinheit gemeinsam ein vollständiges, zweiteiliges Gehäuse der ersten Brennstoffzelleneinheit bilden, ohne dass hierfür weitere, insbesondere metallische, Gehäuseteile erforderlich sind.

Dieses Gehäuse kann insbesondere eine Kathoden-Elektrolyt-Anoden-Einheit der ersten Brennstoffzelleneinheit zwischen den beiden Gehäuseteilen einschließen.

Der vorliegenden Erfindung liegt die weitere Aufgabe zugrunde, ein Verfahren zum Herstellen eines Brennstoffzellenstapels, der mehrere Brennstoffzelleneinheiten umfasst, welche längs einer Stapelrichtung aufeinanderfolgen, wobei jede der Brennstoffzelleneinheiten ein Gehäuse mit mindestens einem Gehäuseteil aus einem metallischen Material umfasst, zu schaffen, durch welches die Gehäuse der Brennstoffzelleneinheiten so miteinander verbindbar sind, dass auch bei hoher Betriebstemperatur eine ausreichende elektrische Isolationswirkung, eine ausreichende Gasdichtheit und eine ausreichende mechanische Festigkeit gewährleistet sind.

Diese Aufgabe wird erfindungsgemäß durch ein Verfahren nach Anspruch 18 gelöst.

Besondere Ausgestaltungen des erfindungsgemäßen Verfahrens sind Gegenstand der Ansprüche 19 und 20, deren Vorteile bereits vorstehend im Zusammenhang mit besonderen Ausgestaltungen der erfindungsgemäßen Dichtungsanordnung erläutert worden sind.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische Explosionsdarstellung der Elemente einer Brennstoffzelleneinheit;
- Fig. 2: eine schematische Explosionsdarstellung der Brennstoffzelleneinheit aus Fig. 1, nachdem eine KEA-Einheit der Brennstoffzelleneinheit mit einem Gehäuseoberteil der Brennstoffzelleneinheit verlötet worden ist;
- Fig. 3: eine schematische Explosionsdarstellung der Brennstoffzelleneinheit aus Fig. 2, nachdem das Gehäuseoberteil und ein Gehäuseunterteil miteinander verschweißt worden sind, und einer weiteren, in der Stapelrichtung eines Brennstoffzellenstapels über dieser ersten Brennstoffzelleneinheit angeordneten zweiten Brennstoffzelleneinheit gleichen Aufbaus;
- Fig. 4: eine schematische perspektivische Darstellung der beiden Brennstoffzelleneinheiten aus Fig. 3, nachdem das Gehäuseoberteil der ersten Brennstoffzelleneinheit mit dem Gehäuseunterteil der zweiten Brennstoffzelleneinheit verlötet worden ist;
- Fig. 5: eine schematische Draufsicht von oben auf einen Brennstoffzellenstapel;

- Fig. 6: eine ausschnittsweise, im Bereich eines Oxidationsmittelkanals teilweise geschnittene perspektivische Ansicht des Brennstofftellenstapels;
- Fig. 7: einen schematischen vertikalen Schnitt durch den Brennstoffzellenstapel im Bereich des Oxidationsmittelkanals, längs der Linie 7 - 7 in Fig. 5;
- Fig. 8: eine vergrößerte Explosionsdarstellung des Bereichs I aus Fig. 7; und
- Fig. 9: einen schematischen vertikalen Schnitt durch den Brennstoffzellenstapel im Bereich eines Brenngaskanals, längs der Linie 9 - 9 in Fig. 5.

Gleiche oder funktional äquivalente Elemente sind in allen Figuren mit denselben Bezugszeichen bezeichnet.

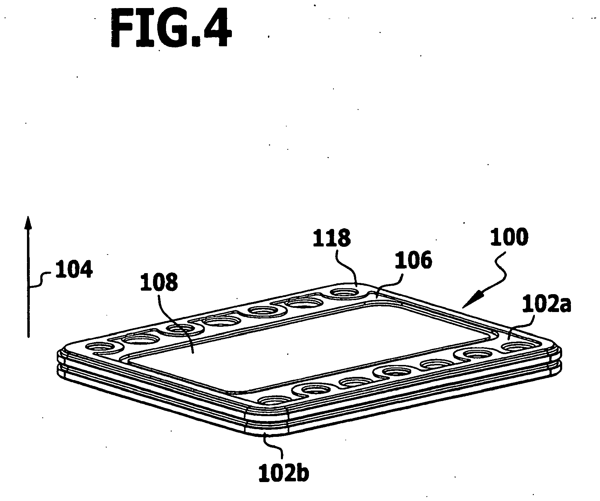

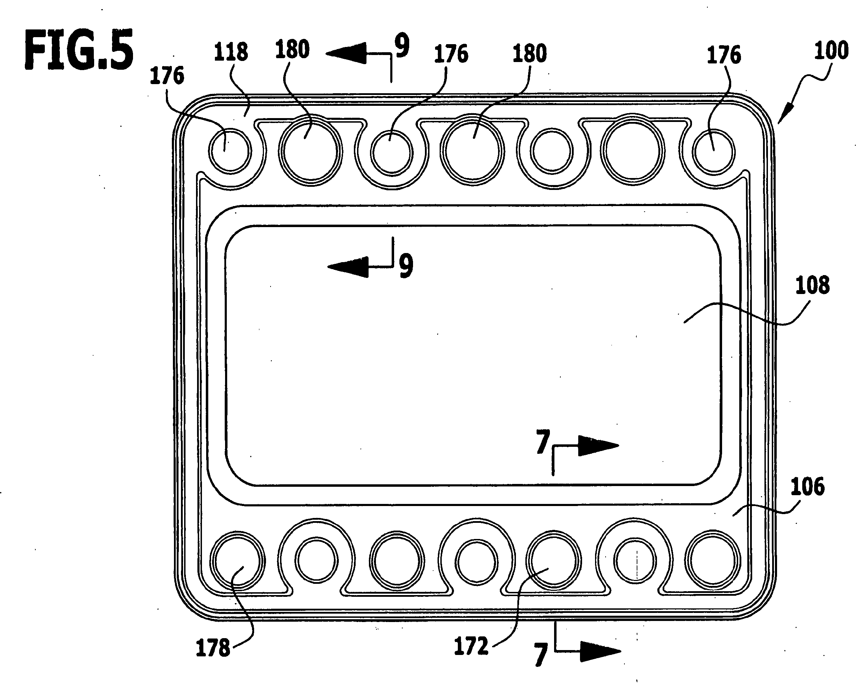

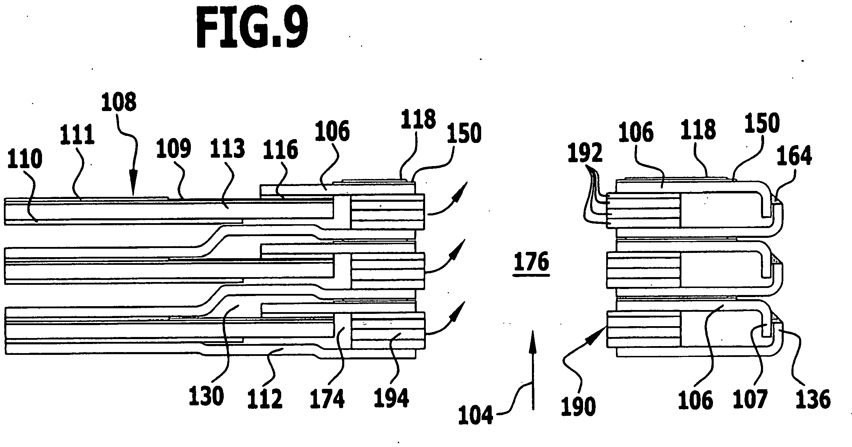

Ein in den Fig. 4 bis 9 dargestellter, als Ganzes mit 100 bezeichneter Brennstoffzellenstapel umfasst mehrere Brennstoffzelleneinheiten 102 von jeweils gleichem Aufbau, welche längs einer vertikalen Stapelrichtung 104 aufeinandergestapelt sind.

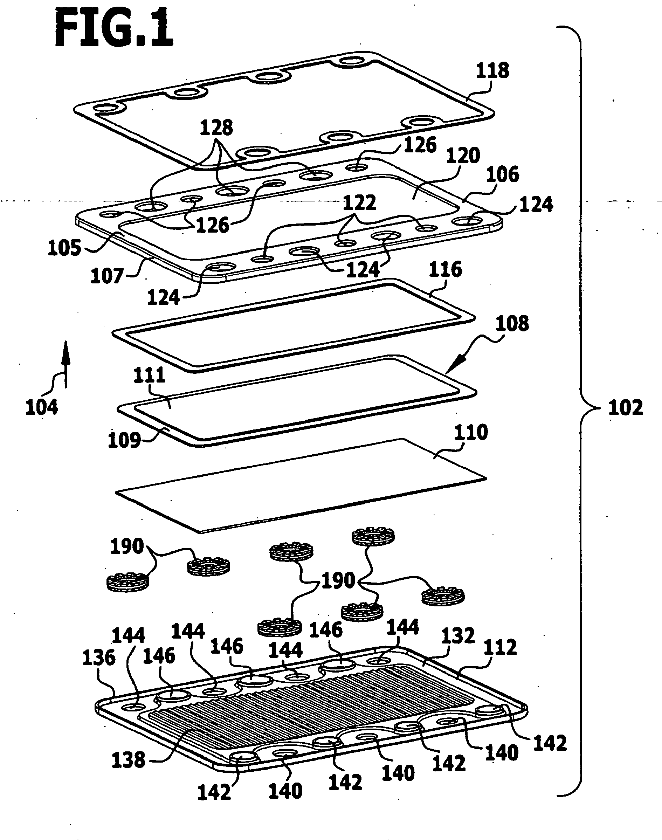

Jede der Brennstoffzelleneinheiten 102 umfasst die in Fig.1 einzeln dargestellten Bestandteile, nämlich ein Gehäuseoberteil 106, eine Kathoden-Elektrolyt-Anoden-Einheit (KEA-Einheit) 108, ein Kontaktmaterial 110, ein Gehäuseunterteil 112 und Abstandshalterringe 190.

Ferner ist in Fig. 1 eine erste Lotschicht 116 zum Verlöten der KEA-Einheit 108 mit dem Gehäuseoberteil 106 und eine zweite Lotschicht 118 zum Verlöten des Gehäuseoberteils 106 mit dem Gehäuseunterteil 112 einer darüberliegenden zweiten Brennstoffzelleneinheit 102 dargestellt.

Das Gehäuseoberteil 106 ist als ein Blechformteil ausgebildet und umfasst eine im wesentlichen rechteckige und im wesentlichen ebene Blechplatte 105, welche mit einer im wesentlichen rechteckigen mittigen Durchtrittsöffnung 120 versehen ist, durch welche im fertig montierten Zustand der Brennstoffzelleneinheit die KEA-Einheit 108 der Brennstoffzelleneinheit 102 für eine Kontaktierung durch das Gehäuseunterteil 112 der in der Stapelrichtung 104 darüberliegenden Brennstoffzelleneinheit 102 zugänglich ist.

Auf der einen Seite der Durchtrittsöffnung 120 ist das Gehäuseoberteil 106 mit mehreren, beispielsweise drei, Brenngaszuführöffnungen 122 versehen, welche im Wechsel mit mehreren, beispielsweise vier, Oxidationsmittelzuführöffnungen 124 angeordnet sind.

Auf der gegenüberliegenden Seite der Durchtrittsöffnung 120 ist das Gehäuseoberteil 106 mit mehreren, beispielsweise vier, Brenngasabführöffnungen 126 versehen, die im Wechsel mit mehreren, beispielsweise drei, Oxidationsmittelabführöffnungen 128 angeordnet sind.

Die Blechplatte 105 geht an ihrem äußeren Rand in einen im wesentlichen parallel zu der Stapelrichtung 104 ausgerichteten Randflansch 107 über.

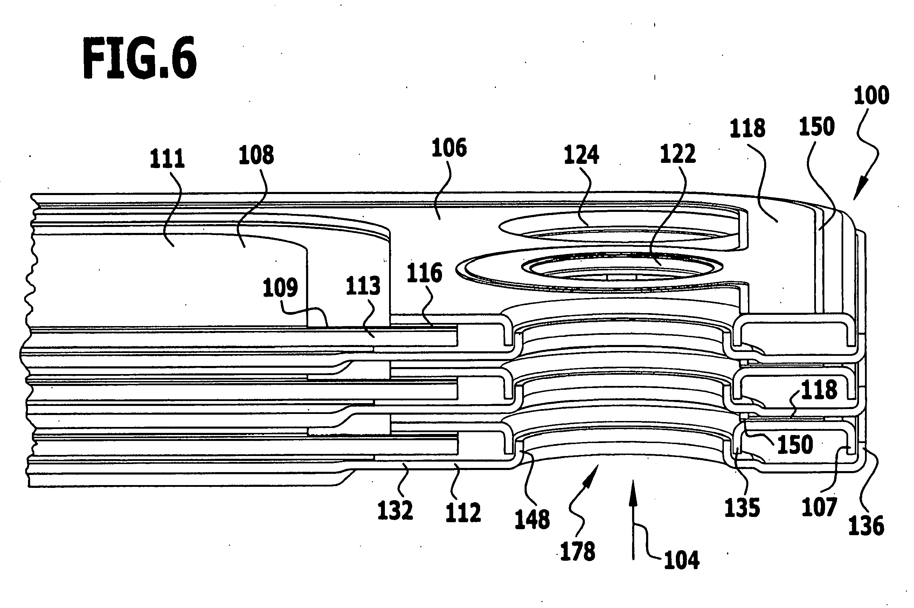

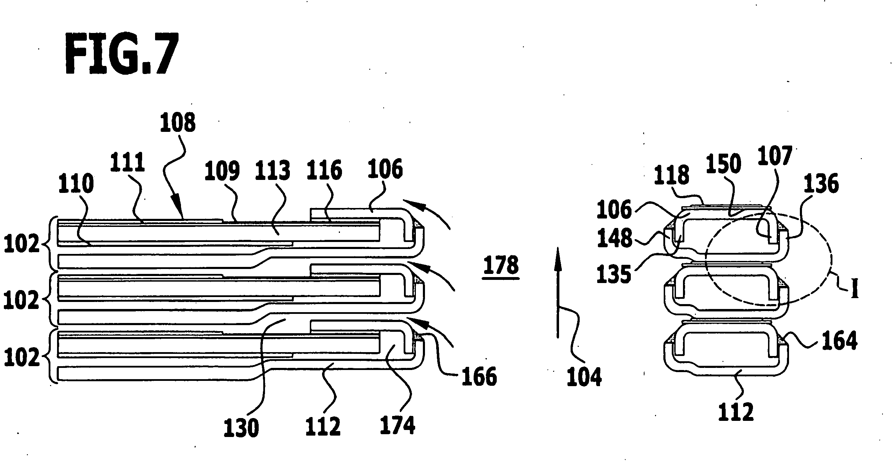

Die Oxidationsmittetzuführöffnungen 124 und die Oxidationsmittelabführöffnungen des Gehäuseoberteils 106 sind von jeweils einem die betreffende Öffnung ringförmig umgebenden, im wesentlichen parallel zur Stapelrichtung 104 ausgerichteten Ringflansch 135 umgeben (siehe Fig. 6 und 7).

Das Gehäuseoberteil 106 ist vorzugsweise aus einem hochkorrosionsbeständigen Stahl, beispielsweise aus der Legierung Crofer 22, hergestellt.

Der Werkstoff Crofer 22 hat die folgende Zusammensetzung:
22 Gewichts-Prozent Chrom, 0,6 Gewichts-Prozent Aluminium, 0,3 Gewichts-Prozent Silizium, 0,45 Gewichts-Prozent Mangan, 0,08 Gewichts-Prozent Titan, 0,08 Gewichts-Prozent Lanthan, Rest Eisen.

Dieser Werkstoff wird von der Firma ThyssenKrupp VDM GmbH, Plettenberger Straße 2, 58791 Werdohl, Deutschland, vertrieben.

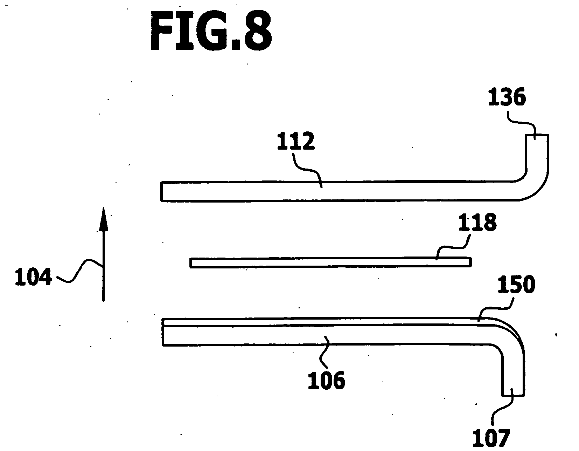

Wie aus Fig. 8 zu ersehen ist, ist das Gehäuseoberteil 106 an seiner dem Gehäuseunterteil 112 einer benachbarten Brennstoffzelleneinheit 102 zugewandten Oberseite mit einer Keramikbeschichtung 150 aus einem keramischen Material, welches bei der Betriebstemperatur der Brennstoffzelleneinheit 102 eine elektrische Isolationswirkung aufweist, versehen.

Die Keramikbeschichtung 150 des Gehäuseoberteils 106 kann sich über die gesamte Oberseite des Gehäuseoberteils 106 oder aber auch nur über die Stellen erstrecken, an denen das Gehäuseoberteil 106 mit dem Gehäuseunterteil 112 der darüberliegenden Brennstoffzelleneinheit 102 verlötet wird.

Diese elektrisch isolierende Keramikbeschichtung 150 wird in einer Schichtdicke von beispielsweise ungefähr 30 µm bis beispielsweise ungefähr 500 µm durch thermisches Spritzen aufgebracht.

Hierfür geeignete Verfahren sind beispielsweise das atmosphärische Plasmaspritzen, das Vakuumplasmaspritzen oder das Flammspritzen.

Als Material für die Keramikbeschichtung 150 eignen sich beispielsweise die folgenden, durch thermisches Spritzen aufzubringenden Isoliermaterialien:
- 99,5 %-iges Aluminiumoxid;
- ein Gemisch aus 97 Gewichts-Prozent Aluminiumoxid und 3 Gewichts-Prozent Titandioxid;
- Yttrium-stabilisiertes Zirkoniumdioxid 5YSZ oder 8YSZ;
- ein Gemisch von 70 Gewichts-Prozent Aluminiumoxid und 30 Gewichts-Prozent Magnesiumoxid;
- ein Aluminium-Magnesium-Spinell.

Alternativ zu einem Gehäuseoberteil 106 mit einer durch thermisches Spritzen aufgebrachten keramischen Isolierschicht kann auch ein Gehäuseoberteil 106 aus einem hochkorrosionsbeständigen Stahl, der Aluminium enthält, verwendet werden, welcher durch Voroxidation des aluminiumhaltigen metallischen Materials mit einer Keramikbeschichtung 150 aus Aluminiumoxid versehen worden ist.

Insbesondere kann ein solches Gehäuseoberteil 106 aus der Stahllegierung gebildet sein, die unter der Bezeichnung "FeCrAlY" oder auch "Aluchrom Y" bekannt ist.

Die Zusammensetzung der FeCrAlY-Legierung ist die folgende: 30 Gewichts-Prozent Chrom, 5 Gewichts-Prozent Aluminium, 0,5 Gewichts-Prozent Yttrium, Rest Eisen.

Das durch Ausstanzen aus einem Blech aus dieser Stahllegierung und Umformvorgänge hergestellte Gehäuseoberteil 106 wird in eine sauerstoffhaltige Atmosphäre (beispielsweise in Luft) eingebracht und während einer Zeitdauer von beispielsweise zwei Stunden auf einer Temperatur von ungefähr 1100 °C gehalten. Durch diese Temperaturbehandlung in sauerstoffhaltiger Atmosphäre wird an der Oberseite des Gehäuseoberteils 106 die Keramikbeschichtung 150 aus Aluminiumoxid erzeugt.

Die KEA-Einheit 108 umfasst eine Anode 113, einen über der Anode 113 angeordneten Elektrolyten 109 und eine über dem Elektrolyten 109 angeordnete Kathode 111.

Die Anode 113 ist aus einem bei der Betriebstemperatur der Brennstoffzelleneinheit (von ungefähr 800 °C bis ungefähr 900 °C) elektrisch leitfähigen keramischen Material, beispielsweise aus ZrO₂ oder aus einem NiZrO₂-Cermet (Keramik-Metall-Gemisch), gebildet, welches porös ist, um einem Brenngas den Durchtritt durch die Anode 113 zu dem an die Anode 113 angrenzenden Elektrolyten 109 zu ermöglichen.

Als Brenngas kann beispielsweise ein kohlenwasserstoffhaltiges Gasgemisch oder reiner Wasserstoff verwendet werden.

Der Elektrolyt 109 ist vorzugsweise als Feststoffelektrolyt, insbesondere als Feststoffoxid-Elektrolyt, ausgebildet und beispielsweise aus Yttrium-stabilisiertem Zirkoniumdioxid gebildet. Der Elektrolyt 109 ist bei Umgebungs- wie bei Betriebstemperatur elektronisch nichtleitend. Hingegen nimmt seine ionische Leitfähigkeit mit steigender Temperatur zu.

Die Kathode 111 ist aus einem bei der Betriebstemperatur der Brennstoffzelleneinheit elektrisch leitfähigen keramischen Material, beispielsweise aus (La_{0,8}Sr_{0,2})_{0,98}MnO₃, gebildet und porös, um einem Oxidationsmittel, beispielsweise Luft oder reinem Sauerstoff, aus einem an die Kathode 111 angrenzenden Oxidationsmittelraum 130 den Durchtritt zu dem Elektrolyten 109 zu ermöglichen.

Der gasdichte Elektrolyt 109 der KEA-Einheit 108 erstreckt sich bis zum Rand der gasdurchlässigen Anode 113, wobei die Kathodenfläche kleiner als die Anodenfläche ist, so dass der Elektrolyt 109 in seinem Randbereich mit dem Gehäuseoberteil 106 verlötet werden kann.

Das Kontaktmaterial 110, das zwischen der KEA-Einheit 108 und dem Gehäuseunterteil 112 angeordnet ist, kann beispielsweise als ein Netz, Gestrick oder Vlies aus Nickeldraht ausgebildet sein.

Das Gehäuseunterteil 112 ist als ein Blechformteil ausgebildet und umfasst eine im wesentlichen rechteckige, senkrecht zu der Stapelrichtung 104 ausgerichtete Platte 132, welche an ihren Rändern in einen im wesentlichen parallel zu der Stapelrichtung 104 ausgerichteten Randflansch 136 übergeht.

Die Platte 132 weist ein im wesentlichen rechteckiges, mittiges Kontaktfeld 138 auf, welches mit Kontaktelementen zur Kontaktierung des Kontaktmaterials 110 einerseits und der Kathode 111 einer KEA-Einheit 108 einer benachbarten Brennstoffzelleneinheit 102 andererseits versehen ist, welche beispielsweise wellblechförmig oder noppenförmig ausgebildet seien können.

Auf der einen Seite des Kontaktfeldes 138 ist die Platte 132 mit mehreren, beispielsweise drei, Brenngaszuführöffnungen 140 versehen, welche im Wechsel mit mehreren, beispielsweise vier, Oxidationsmittetzuführöffnungen 142 angeordnet sind.

Die Brenngaszuführöffnungen 140 und die Oxidationsmittelzuführöffnungen 142 des Gehäuseunterteils 112 fluchten mit den Brenngaszuführöffnungen 122 bzw. den Oxidationsmittelzuführöffnungen 124 des Gehäuseoberteils 106.

Auf der anderen Seite des Kontaktfeldes 138 ist die Platte 132 mit mehreren, beispielsweise vier, Brenngasabführöffnungen 144 versehen, welche im Wechsel mit mehreren, beispielsweise drei, Oxidationsmittelabführöffnungen 146 angeordnet sind.

Die Brenngasabführöffnungen 144 und die Oxidationsmittelabführöffnungen 146 des Gehäuseunterteils 112 fluchten mit den Brenngasabführöffnungen 126 bzw. mit den Oxidationsmittelabführöffnungen 128 des Gehäuseoberteils 106.

Die Oxidationsmittelabführöffnungen 146 liegen vorzugsweise den Brenngaszuführöffnungen 140 gegenüber, und die Brenngasabführöffnungen 144 liegen vorzugsweise den Oxidationsmittelzuführöffnungen 142 gegenüber.

Wie am besten aus den Fig. 6 und 7 zu ersehen ist, sind die Oxidationsmittelzuführöffnungen 142 (ebenso wie die Oxidationsmittelabführöffnungen 146) des Gehäuseunterteils 112 von jeweils einem die betreffende Öffnung ringförmig umgebenden, im wesentlichen parallel zur Stapelrichtung 104 ausgerichteten Ringflansch 148 umgeben.

Das Gehäuseunterteil 112 ist vorzugsweise aus einem hochkorrosionsbeständigen Stahl, beispielsweise aus der vorstehend bereits genannten Legierung Crofer 22, hergestellt.

Zur mechanischen Stabilisierung der Brennstoffzelleneinheit 102 sind ferner Abstandshalterringe 190 vorgesehen, welche im Bereich der Brenngaszuführöffnungen 122 bzw. 140 und im Bereich der Brenngasabführöffnungen 126 bzw. 144 zwischen dem Gehäuseoberteil 106 und dem Gehäuseunterteil 112 der Brennstoffzelleneinheit 102 angeordnet sind, um das Gehäuseoberteil 106 und das Gehäuseunterteil 112 in diesem Bereich auf Abstand voneinander zu halten.

Jeder der Abstandshalterringe 190 besteht aus mehreren übereinandergelegten Metalllagen 192, wobei durch Ausnehmungen in den Metalllagen 192 Brenngasdurchtrittskanäle 194 ausgebildet sind, welche den Durchtritt von Brenngas durch die Abstandshalterringe 190 hindurch ermöglichen.

Zur Herstellung der in Fig. 4 dargestellten Brennstoffzelleneinheiten 102 aus den vorstehend beschriebenen Einzelelementen wird wie folgt vorgegangen:

Zunächst wird das Gehäuseunterteil 112 auf die vorstehend beschriebene Weise mit der Keramikbeschichtung 150 versehen.

Anschließend wird der Elektrolyt 109 der KEA-Einheit 108 längs des Randes seiner Oberseite mit dem Gehäuseoberteil 106 verlötet, und zwar an der Unterseite des die Durchtrittsöffnung 120 in dem Gehäuseoberteil 106 umgebenden Bereiches des Gehäuseoberteils 106.

Das hierfür benötigte Lötmaterial kann, wie in Fig. 1 dargestellt, als entsprechend zugeschnittene Lötfolie 116 zwischen den Elektrolyten 109 und das Gehäuseoberteil 106 eingelegt werden oder aber mittels eines Dispensers in Form einer Lötmaterialraupe auf die Oberseite des Elektrolyten 109 und/oder auf die Unterseite des Gehäuseoberteils 106 aufgetragen werden. Ferner ist es auch möglich, das Lötmaterial mittels eines Musterdruckverfahrens, beispielsweise eines Siebdruckverfahrens, auf die Oberseite des Elektrolyten 109 und/oder auf die Unterseite des Gehäuseoberteils 106 aufzubringen.

Als Lötmaterial kann ein Silberbasislot mit Kupferzusatz verwendet werden, beispielsweise ein Silberbasislot mit der Zusammensetzung (in mol-Prozent): Ag-4Cu oder Ag-8Cu.

Die Lötung erfolgt in einer Luftatmosphäre. Die Löttemperatur beträgt beispielsweise 1050 °C, die Lötdauer beispielsweise ungefähr 5 Minuten. Bei der Lötung in Luft bildet sich in situ Kupferoxid.

Alternativ hierzu kann als Lötmaterial auch ein Silberbasislot ohne Kupferzusatz verwendet werden. Ein solches kupferfreies Lot bietet den Vorteil einer höheren Solidustemperatur (diese beträgt ohne Kupferzusatz ungefähr 960 °C, mit Kupferzusatz ungefähr 780 °C). Da reines Silber Keramikoberflächen nicht benetzt, wird den Silberbasisloten ohne Kupferzusatz Kupfer(II)oxid zur Verkleinerung des Randwinkels zugesetzt. Die Lötung mit Silberbasisloten ohne Kupferzusatz erfolgt in einer Luftatmosphäre oder in einer Schutzgasatmosphäre, beispielsweise unter Argon.

Die Löttemperatur beträgt auch in diesem Fall vorzugsweise ungefähr 1050 °C, die Lötdauer beispielsweise ungefähr 5 Minuten.

Alternativ zum Einlöten der KEA-Einheit 108 in das Gehäuseoberteil 106 kann auch vorgesehen sein, dass ein Substrat, auf dem die KEA-Einheit 108 noch nicht erzeugt worden ist, mit dem Gehäuseoberteil 106 verschweißt wird und nach der Verschweißung die elektrochemisch aktiven Schichten der KEA-Einheit 108, d. h. deren Anode, Elektrolyt und Kathode, nacheinander im Vakuumplasmaspritzverfahren auf dem mit dem Gehäuseoberteil 106 bereits verschweißten Substrat erzeugt werden.

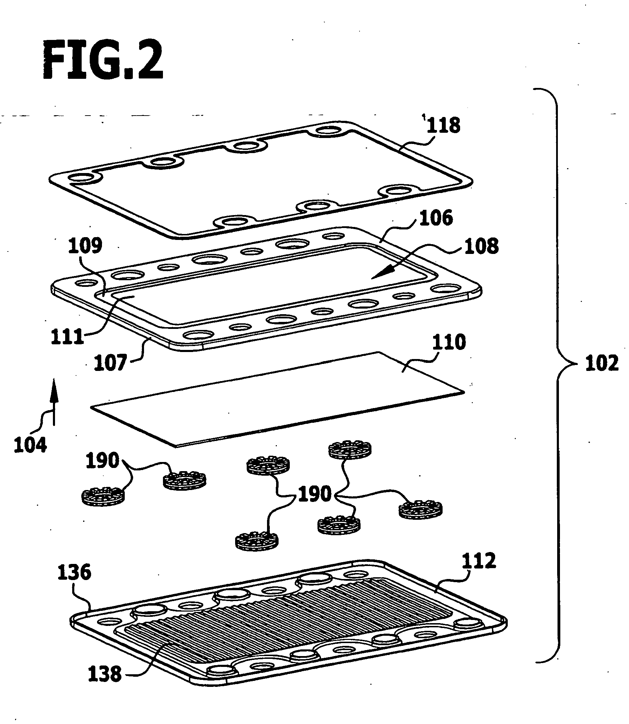

Nach der Verbindung der KEA-Einheit 108 mit dem Gehäuseoberteil 106 ist der in Fig. 2 dargestellte Zustand erreicht.

Anschließend werden das Kontaktmaterial 110 und die Abstandshalterringe 190 zwischen das Gehäuseunterteil 112 und das Gehäuseoberteil 106 eingelegt und gegebenenfalls mit dem Gehäuseunterteil 112 und/oder mit dem Gehäuseoberteil 106 verlötet und/oder verschweißt, und dann werden das Gehäuseunterteil 112 und das Gehäuseoberteil 106 längs einer Schweißnaht 164, die am äußeren Rand des Randflansches 136 des Gehäuseunterteils 112 und am Randflansch 107 des Gehäuseoberteils 106 umläuft, und längs Schweißnähten 166, die an den inneren Rändern der Ringflansche 148 des Gehäuseunterteils 112 und an den Ringflanschen 135 der Oxidationsmittelzuführöffnungen 124 bzw. der Oxidationsmittelabführöffnungen 128 des Gehäuseoberteils 106 umlaufen; gasdicht miteinander verschweißt.

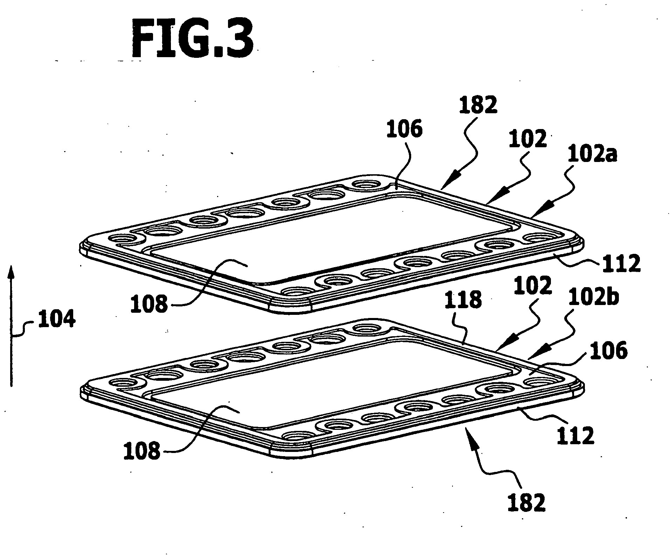

Nach diesem Verfahrensschritt ist der in Fig. 3 dargestellte Zustand erreicht.

Nun wird das Gehäuseoberteil 106 der unteren Brennstoffzelleneinheit 102b an seiner dem Gehäuseunterteil 112 der oberen Brennstoffzelleneinheit 102a zugewandten, mit der Keramikbeschichtung 150 versehenen Seite mittels eines Lötmaterials unmittelbar mit dem Gehäuseunterteil 112 an dessen dem Gehäuseoberteil 106 zugewandten Seite unter Gewichtsbelastung verlötet.

Hierbei können dieselben Lötmaterialien verwendet werden, die vorstehend im Zusammenhang mit der Verlötung der KEA-Einheit 108 und des Gehäuseoberteils 106 beschrieben worden sind, und der Lötvorgang kann unter denselben Bedingungen erfolgen.

Insbesondere kann also das hierfür benötigte Lötmaterial, wie in Fig. 3 dargestellt, als entsprechend zugeschnittene Lötfolie 118 zwischen das Gehäuseoberteil 106 der unteren Brennstoffzelleneinheit 102b und das Gehäuseunterteil 112 der oberen Brennstoffzelleneinheit 102a eingelegt werden oder aber mittels eines Dispensers in Form einer Lötmaterialraupe auf die Oberseite des Gehäuseoberteils 106 und/oder auf die Unterseite des Gehäuseunterteils 112 aufgetragen werden. Ferner ist es auch möglich, das Lötmaterial mittels eines Musterdruckverfahrens, beispielsweise eines Siebdruckverfahrens, auf die Oberseite des Gehäuseoberteils 106 und/oder auf die Unterseite des Gehäuseunterteils 112 aufzubringen.

Als Lötmaterial kann ein Silberbasislot mit Kupferzusatz verwendet werden, beispielsweise ein Silberbasislot mit der Zusammensetzung (in mol-Prozent): Ag-4Cu oder Ag-8Cu.

Die Lötung erfolgt in einer Luftatmosphäre. Die Löttemperatur beträgt beispielsweise 1050 °C, die Lötdauer beispielsweise ungefähr 5 Minuten. Bei der Lötung in Luft bildet sich in situ Kupferoxid.

Alternativ hierzu kann als Lötmaterial auch ein Silberbasislot ohne Kupferzusatz verwendet werden. Ein solches kupferfreies Lot bietet den Vorteil einer höheren Solidustemperatur (diese beträgt ohne Kupferzusatz ungefähr 960 °C, mit Kupferzusatz ungefähr 780 °C). Da reines Silber Keramikoberflächen nicht benetzt, wird den Silberbasisloten ohne Kupferzusatz Kupfer(II)oxid zur Verkleinerung des Randwinkels zugesetzt. Die Lötung mit Silberbasisloten ohne Kupferzusatz erfolgt in einer Luftatmosphäre oder in einer Schutzgasatmosphäre, beispielsweise unter Argon.

Geeignete Silberbasislote ohne Zusatz von elementarem Kupfer haben beispielsweise die Zusammensetzung (in mol-Prozent): Ag-4CuO oder Ag-8CuO.

Zur weiteren Verbesserung der Benetzung (Verkleinerung des Randwinkels) kann ein Zusatz von Titan dienen. Zur Herstellung der Lote wird ein inniges Gemenge der entsprechenden Komponenten in Pulverform verwendet. Aus diesem Gemenge bildet sich in situ die Lotlegierung. Das Titan wird diesem Gemenge in Form von Titanhydrid zugesetzt. Aus dem Hydrid bildet sich bei ungefähr 400°C ein metallisches Titan.

Geeignete Silberbasislote ohne Zusatz von elementarem Kupfer, aber mit Zusatz von Titan haben beispielsweise die Zusammensetzung (in mol-Prozent): Ag-4CuO-0,5Ti oder Ag-8CuO-0,5Ti.

Die Löttemperatur beträgt auch in diesem Fall vorzugsweise ungefähr 1050 °C, die Lötdauer beispielsweise ungefähr 5 Minuten.

Ferner können als Lötmaterial zum Verlöten des Gehäuseoberteils 106 mit dem Gehäuseunterteil 112 auch Aktivlote verwendet werden.

Aktivlote sind metallische Legierungen, die grenzflächenaktive Elemente (z.B. Titan, Zirkonium, Hafnium, Niob und/oder Tantal) in geringen Mengen enthalten und somit in der Lage sind, die Grenzflächenenergie zwischen einem keramischen Material und der Lotschmelze so weit herabzusetzen, dass eine Benetzung des keramischen Materials durch das Lot erfolgen kann.

Die Aktivlöttechnik unter Verwendung von Aktivloten ermöglicht die Herstellung von Keramik-Keramik/Metall-Verbunden in einem einstufigen Fügeprozess, ohne vorhergehende Metallisierung der Keramikfügeflächen. Die Benetzung der Keramikfügeflächen durch das Lot wird hierbei durch die Verwendung eines Aktivlots sichergestellt.

Ein geeignetes Aktivlot wird beispielsweise unter der Bezeichnung "Copper ABA" von der Firma Wesgo Metals, 610 Quarry Road, San Carlos, CA 94070, USA, vertrieben.

Dieses Aktivlot hat die folgende Zusammensetzung: 2 Gewichts-% Al; 92,7 Gewichts-% Cu; 3 Gewichts-% Si; und 2,3 Gewichts-% Ti.

Der Lötvorgang kann insbesondere gemäß dem folgenden Temperaturprogramm durchgeführt werden:
- Sofern das Lotmaterial in Form einer Lotpaste aufgetragen wird, wird die Lotpaste während einer Dauer von ungefähr 10 Minuten bei einer Temperatur von ungefähr 150°C getrocknet.
- Anschließend erfolgt die Verlötung in drei Schritten, wobei in einem ersten Schritt die miteinander zu verlötenden Bauelemente während einer Stunde von Raumtemperatur auf eine Temperatur von ungefähr 300°C erwärmt werden, in einer anschließenden zweiten Stufe die zu verlötenden Bauelemente innerhalb von drei Stunden von einer Temperatur von ungefähr 300°C auf eine Temperatur von ungefähr 550°C erwärmt werden und in einem dritten Schritt die miteinander zu verlötenden Bauelemente innerhalb von drei Stunden von einer Temperatur von ungefähr 550°C auf eine Endtemperatur von ungefähr 1.050°C erwärmt werden, wobei die Endtemperatur für einen Zeitraum von beispielsweise ungefähr 5 Minuten gehalten wird.
- Nach erfolgter Verlötung erfolgt die Abkühlung der miteinander verlöteten Bauelemente auf Raumtemperatur über einen längeren Zeitraum, beispielsweise über Nacht.

Um ein unerwünschtes Fließen des Lotmaterials über den zu verlötenden Bereich hinaus zu verhindern, kann in den Bereichen des Gehäuseoberteils 106 und des Gehäuseunterteils 112, welche frei von dem Lotmaterial bleiben sollen, ein Lotstopp-Material aufgetragen werden.

Geeignete Lotstopp-Materialien werden unter den Bezeichnungen "Stopyt Liquid" oder "Stopyt Liquid #62A" von der Firma Wesgo Metals, 610 Quarry Road, San Carlos, CA 94070, USA, vertrieben.

Wird der Lötvorgang im Vakuum oder in einer Schutzgasatmosphäre durchgeführt, so ist zu beachten, dass der Sauerstoffpartialdruck nicht unter eine bestimmte Untergrenze absinkt, da sonst die Kathode 111 der KEA-Einheit 108 zerstört wird.

Im Falle einer Kathode aus Lanthanstrontiummanganat (LSM) beträgt die Untergrenze für den Sauerstoffpartialdruck ungefähr 1 ppm (10⁻⁴ bar); im Falle einer Kathode aus Lanthanstrontiumcobaltferrit (LSCF) beträgt die Untergrenze für den Sauerstoffpartialdruck ungefähr 10 ppm (10⁻³ bar).

Nachdem das Gehäuseoberteil 106 der unteren Brennstoffzelleneinheit 102b mit dem Gehäuseunterteil 112 der oberen Brennstoffzelleneinheit 102a verlötet worden ist, ist der in Fig. 4 dargestellte Zustand erreicht.

Nachdem auf diese Weise zwei Brennstoffzelleneinheiten 102 miteinander verbunden worden sind, kann der Brennstoffzellenstapel 100 durch sukzessives Anlöten weiterer Brennstoffzelleneinheiten 102 an das Gehäuseoberteil 106 der oberen Brennstoffzelleneinheit 102a oder an das Gehäuseunterteil 112 der unteren Brennstoffzelleneinheit 102b in der Stapelrichtung 104 bis zu der gewünschten Anzahl von Brennstoffzelleneinheiten 102 nach und nach aufgebaut werden.

In dem fertiggestellten Brennstoffzellenstapel 100 bilden die jeweils miteinander fluchtenden Brenngaszuführöffnungen 122 und 140 der Gehäuseoberteile 106 und der Gehäuseunterteile 112 jeweils einen Brenngaszuführkanal 172, welcher sich in jeder Brennstoffzelleneinheit 102 zwischen der Oberseite des Gehäuseunterteils 112 und der Unterseite des Gehäuseoberteils 106 zu einem Brenngasraum 174 hin öffnet, der zwischen der Oberseite des Kontaktfeldes 138 des Gehäuseunterteils 112 einerseits und der Unterseite der KEA-Einheit 108 andererseits ausgebildet ist.

Die jeweils miteinander fluchtenden Brenngasabführöffnungen 126 und 144 der Gehäuseoberteile 106 und der Gehäuseunterteile 112 bilden jeweils einen Brenngasabführkanal 176, welcher auf der den Brenngaszuführkanälen 172 gegenüberliegenden Seite jeder Brennstoffzelleneinheit 102 im Bereich zwischen der Oberseite des Gehäuseunterteils 112 und der Unterseite des Gehäuseoberteils 106 zu dem Brenngasraum 174 hin geöffnet ist.

Die jeweils miteinander fluchtenden Oxidationsmittelzuführöffnungen 124 und 142 der Gehäuseoberteile 106 und der Gehäuseunterteile 112 bilden zusammen jeweils einen Oxidationsmittelzuführkanal 178, der im Bereich jeder Brennstoffzelleneinheit 102 zwischen der Oberseite des Gehäuseoberteils 106 und der Unterseite des Gehäuseunterteils 112 der in der Stapelrichtung 104 darüberliegenden Brennstoffzelleneinheit 102 zu dem Oxidationsmittelraum 130 der Brennstoffzelleneinheit 102 hin geöffnet ist.

Ebenso bilden die jeweils miteinander fluchtenden Oxidationsmittelabführöffnungen 128 und 146 der Gehäuseoberteile 106 bzw. der Gehäuseunterteile 112 jeweils einen Oxidationsmittelabführkanal 180, welcher auf der den Oxidationsmittelzuführkanälen 178 entgegengesetzten Seite der Brennstoffzelleneinheiten 102 angeordnet ist und sich ebenfalls im Bereich jeder Brennstoffzelleneinheit 102 zwischen der Oberseite des Gehäuseoberteils 106 und der Unterseite des Gehäuseunterteils 112 der in der Stapelrichtung 104 darüberliegenden Brennstoffzelleneinheit 102 zu dem Oxidationsmittelraum 130 der Brennstoffzelleneinheit 102 hin öffnet.

Im Betrieb des Brennstoffitellenstapels 100 wird ein Brenngas dem Brenngasraum 174 jeder Brennstoffzelleneinheit 102 über die Brenngaszuführkanäle 172 zugeführt und durch Oxidation an der Anode 113 der KEA-Einheit 108 entstandenes Abgas sowie nicht verbrauchtes Brenngas durch die Brenngasabführkanäle 176 aus dem Brenngasraum 174 abgeführt.

Ebenso wird ein Oxidationsmittel, beispielsweise Luft, durch die Oxidationsmittelzuführkanäle 178 dem Oxidationsmittelraum 130 jeder Brennstoffzellen einheit 102 zugeführt und nicht verbrauchtes Oxidationsmittel durch die Oxidationsmittelabführkanäle 180 aus dem Oxidationsmittelraum 130 abgeführt.

Im Betrieb des Brennstoffzellenstapels 100 weisen die KEA-Einheiten 108 eine Temperatur von beispielsweise 850 °C auf, bei welcher der Elektrolyt jeder KEA-Einheit 108 für Sauerstoffionen leitfähig ist. Das Oxidationsmittel aus dem Oxidationsmittelraum 130 nimmt an der Kathode 111 Elektronen auf und gibt zweifach negativ geladene Sauerstoffionen an den Elektrolyten 109 ab, welche durch den Elektrolyten 109 zur Anode 113 wandern. An der Anode 113 wird das Brenngas aus dem Brenngasraum 174 durch die Sauerstoffionen aus dem Elektrolyten 109 oxidiert und gibt dabei Elektronen an die Anode 113 ab.

Die bei der Reaktion an der Anode 113 frei werdenden Elektronen werden von der Anode 113 über das Kontaktmaterial 110 und das Gehäuseunterteil 112 der an der Unterseite des Kontaktfeldes 138 des Gehäuseunterteils 112 anliegenden Kathode 111 einer benachbarten Brennsttiffzelleneinheit 102 zugeführt und ermöglichen so die Kathodenreaktion.

Das Gehäuseunterteil 112 und Gehäuseoberteil 106 jeder Brennstoffzelleneinheit 102 sind durch die Schweißnähte 164, 166 elektrisch leitend miteinander verbunden.

Die durch jeweils ein Gehäuseoberteil 106 und ein Gehäuseunterteil 112 gebildeten Gehäuse 182 von in der Stapelrichtung 104 aufeinanderfolgenden Brennstoffzelleneinheiten 102 sind jedoch durch die Keramikbeschichtungen 150 an der Oberseite der Gehäuseoberteile 106 elektrisch voneinander isoliert. Dabei ist durch die Verlötung der Gehäuseoberteile 106 mit den Gehäuseunterteilen 112 benachbarter Brennstoffzelleneinheiten 102 zugleich eine gasdichte Verbindung zwischen diesen Bauelementen gewährleistet, so dass die Oxidationsmittelräume 130 und die Brenngasräume 174 der Brennstoffzelleneinheiten 102 voneinander und von der Umgebung des Brennstoffzellenstapels 100 gasdicht getrennt sind.

Bei einer (nicht dargestellten) Variante der vorstehend beschriebenen Ausführungsform eines Brennstoffzellenstapels 100 ist vorgesehen, dass die elektrisch isolierende Keramikbeschichtung nicht an der Oberseite des Gehäuseoberteils 106, sondern stattdessen an der Unterseite des Gehäuseunterteils 112 angeordnet ist.

Bei einer weiteren Variante ist vorgesehen, dass sowohl die Oberseite des Gehäuseoberteils 106 als auch die Unterseite des Gehäuseunterteils 112 mit jeweils einer elektrisch isolierenden Keramikbeschichtung versehen sind.

## Patentansprüche

1. Dichtungsanordnung für einen Brennstoffzellenstapel (100), der mehrere Brennstoffzelleneinheiten (102) umfasst, welche längs einer Stapelrichtung (104) aufeinanderfolgen, wobei jede der Brennstoffzelleneinheiten (102) ein Gehäuse (182) mit mindestens einem Gehäuseteil (112) aus einem metallischen Material umfasst,
**dadurch gekennzeichnet,**
**dass** die Dichtungsanordnung mindestens ein Gehäuseteil (106) einer ersten Brennstoffzelleneinheit (102b) aus einem metallischen Material umfasst, das mit einer Beschichtung (150) aus einem keramischen Material versehen ist, wobei die Keramikbeschichtung (150) durch thermisches Spritzen erzeugt ist,
wobei das Gehäuseteil (106) der ersten Brennstoffzelleneinheit (102b) an mindestens einer mit der Keramikbeschichtung (150) versehenen Stelle mittels eines Silberbasislotes ohne Kupferzusatz direkt mit einem Gehäuseteil (112) einer zweiten Brennstoffzelleneinheit (102a) verlötet ist,
wobei das mit der Keramikbeschichtung (150) versehene Gehäuseteil (106) der ersten Brennstoffzelleneinheit (102b) an einem zweiten Gehäuseteil (112) der ersten Brennstoffzelleneinheit (102b) festgelegt ist und
wobei das zweite Gehäuseteil (112) der ersten Brennstoffzelleneinheit (102b) im Wesentlichen die gleiche Gestalt aufweist wie das Gehäuseteil (112) der zweiten Brennstoffzelleneinheit (102a), mit welchem das mit der Keramikbeschichtung (150) versehene Gehäuseteil (106) der ersten Brennstoffzelleneinheit (102b) verlötet ist.

2. Dichtungsanordnung nach Anspruch 1, **dadurch gekennzeichnet, dass** das Gehäuseteil (106) der ersten Brennstoffzelleneinheit (102b) mindestens eine Brenngasdurchtrittsöffnung (122, 126) aufweist.

3. Dichtungsanordnung nach einem der Ansprüche 1 oder 2, **dadurch gekennzeichnet, dass** das Gehäuseteil (106) der ersten Brennstoffzelleneinheit (102b) mindestens eine Oxidationsmitteldurchtrittsöffnung (124, 128) aufweist.

4. Dichtungsanordnung nach einem der Ansprüche 1 bis 3, **dadurch gekennzeichnet, dass** das Gehäuseteil (106) der ersten Brennstoffzelleneinheit (102b) mindestens eine Durchtrittsöffnung (120) aufweist, durch welche im montierten Zustand des Brennstoffzellenstapels (100) eine Kathoden-Elektrolyt-Anoden-Einheit (108) der ersten Brennstoffzelleneinheit (102b) für eine elektrische Kontaktierung durch eine andere Brennstoffzelleneinheit (102a) des Brennstoffzellenstapels (100) zugänglich ist.

5. Dichtungsanordnung nach einem der Ansprüche 1 bis 4, **dadurch gekennzeichnet, dass** das Gehäuseteil (106) der ersten Brennstoffzelleneinheit (102b) aus einem Metallblech gebildet ist.

6. Dichtungsanordnung nach einem der Ansprüche 1 bis 5, **dadurch gekennzeichnet, dass** das Gehäuseteil (106) der ersten Brennstoffzelleneinheit (102b) aus einem hochkorrosionsfesten Stahl gebildet ist.

7. Dichtungsanordnung nach einem der Ansprüche 1 bis 6, **dadurch gekennzeichnet, dass** die Keramikbeschichtung (150) Aluminiumoxid und/oder Titandioxid und/oder Zirkoniumdioxid und/oder Magnesiumoxid umfasst.

8. Dichtungsanordnung nach einem der Ansprüche 1 bis 7, **dadurch gekennzeichnet, dass** die Keramikbeschichtung (150) durch atmo- - sphärisches Plasmaspritzen, durch Vakuumplasmaspritzen oder durch Flammspritzen erzeugt ist.

9. Dichtungsanordnung nach einem der Ansprüche 1 bis 8, **dadurch gekennzeichnet, dass** das Gehäuseteil (106) der ersten Brennstoffzelleneinheit (102b) aus einer metallischen Legierung gebildet ist, welchen einen oxidierbaren Bestandteil enthält.

10. Dichtungsanordnung nach Anspruch 9, **dadurch gekennzeichnet, dass** die metallische Legierung Aluminium und/oder Zirkonium als oxidierbaren Bestandteil enthält.

11. Dichtungsanordn.ung nach einem der Ansprüche 1 bis 10, **dadurch gekennzeichnet, dass** die Keramikbeschichtung (150) eine Dicke von ungefähr 20 µm bis ungefähr 1.000 µm aufweist.

12. Dichtungsanordnung nach einem der Ansprüche 1 bis 11, **dadurch gekennzeichnet, dass** das Silberbasislot einen Zusatz von Kupferoxid enthält.

13. Dichtungsanordnung nach einem der Ansprüche 1 bis 12, **dadurch gekennzeichnet, dass** das Gehäuseteil (106) der ersten Brennstoffzelleneinheit (102b) mit dem Gehäuseteil (112) der zweiten Brennstoffzelleneinheit (102a) mittels eines Silberbasislotes mit Titanzusatz verlötet ist.

14. Dichtungsanordnung nach Ansprüche 1 bis 13, **dadurch gekennzeichnet, dass** das mit der Keramikbeschichtung (150) versehene Gehäuseteil (106) der ersten Brennstoffzelleneinheit (102b) mit dem zweiten Gehäuseteil (112) der ersten Brennstoffzelleneinheit (102b) verschweißt und/oder verlötet ist.

15. Dichtungsanordnung nach einem der Ansprüche 1 bis 14, **dadurch gekennzeichnet, dass** das zweite Gehäuseteil (112) der ersten Brennstoffzelleneinheit (102b) mindestens eine Brenngasdurchtrittsöffnung (140, 144) aufweist.

16. Dichtungsanordnung nach einem der Ansprüche 1 bis 15, **dadurch gekennzeichnet, dass** das zweite Gehäuseteil (112) der ersten Brennstoffzelleneinheit (102b) mindestens eine Oxidationsmitteldurchtrittsöffnung (142, 146) aufweist.

17. Dichtungsanordnung nach einem der Ansprüche 1 bis 16, **dadurch gekennzeichnet, dass** das zweite Gehäuseteil (112) der ersten Brennstoffzelleneinheit (102b) mindestens ein Kontaktelement zur elektrischen Kontaktierung einer benachbarten Kathoden-Elektrolyt-Anoden-Einheit (108) aufweist.

18. Verfahren zum Herstellen eines Brennstoffzellenstapels (100), der mehrere Brennstoffzelleneinheiten (102) umfasst, welche längs einer Stapelrichtung (104) aufeinanderfolgen, wobei jede der Brennstoffzelleneinheiten (102) ein Gehäuse (182) mit mindestens einem Gehäuseteil (106, 112) aus einem metallischen Material umfasst, umfassend die folgenden Vertahrensschritte:
- Bereitstellen eines Gehäuseteils (106) einer ersten Brennstoffzelleneinheit (102b) aus einem metallischen Material, das mit einer Beschichtung (150) aus einem keramischen Material versehen ist;
- Verlöten des Gehäuseteils (106) der ersten Brennstoffzelleneinheit (102b) an mindestens einer mit der Keramikbeschichtung (150) versehenen Stelle mittels eines Silberbasislotes ohne Kupferzusatz direkt mit einem Gehäuseteil (112) einer zweiten Brennstoffzelleneinheit (102a);
wobei das mit der Keramikbeschichtung (150) versehene Gehäuseteil (106) der ersten Brennstoffzetleneinheit (102b) an einem zweiten Gehäuseteil (112) der ersten Brennstoffzelleneinheit (102b) festgelegt wird, wobei das zweite Gehäuseteil (112) der ersten Brennstoffzelleneinheit (102b) im Wesentlichen die gleiche Gestalt aufweist wie das Gehäuseteil (112) der zweiten Brennstoffzelleneinheit (102a), mit welchem das mit der Keramikbeschichtung (150) versehene Gehäuseteil (106) der ersten Brennstoffzelleneinheit (102b) verlötet ist, und
wobei die Keramikbeschichtung (150) durch thermisches Spritzen erzeugt wird.

19. Verfahren nach Anspruch 18, **dadurch gekennzeichnet, dass** das mit der Keramikbeschichtung (150) versehene Gehäuseteil (106) der ersten Brennstoffzelleneinheit (102b) mit einem zweiten Gehäuseteil (106) der ersten Brennstoffzelleneinheit (102b) verschweißt und/oder verlötet wird.

20. Verfahren nach einem der Ansprüche 18 oder 19, **dadurch gekennzeichnet, dass** die Keramikbeschichtung (150) durch atmosphärisches Plasmaspritzen, durch Vakuumplasmaspritzen oder durch Flammspritzen erzeugt wird.

## Claims

1. A gasket arrangement for a fuel cell stack (100) which comprises a plurality of fuel cell units (102) that succeed one another in a stack direction (104), wherein each of the fuel cell units (102) comprises a housing (182) incorporating at least one housing part (112) consisting of a metallic material,
**characterized in that**
the gasket arrangement comprises at least one housing part (106) of a first fuel cell unit (102b) consisting of a metallic material which is provided with a coating (150) of a ceramic material, wherein the ceramic coating (150) is produced by a thermal spraying process,
wherein the housing part (106) of the first fuel cell unit (102b) is brazed directly to a housing part (112) of a second fuel cell unit (102a) by means of a silver based braze without a copper additive at at least one position that is provided with the ceramic coating (150),
wherein the housing part (106) of the first fuel cell unit (102b) that is provided with the ceramic coating (150) is fixed to a second housing part (112) of the first fuel cell unit (102b); and
wherein the second housing part (112) of the first fuel cell unit (102b) has substantially the same shape as the housing part (112) of the second fuel cell unit (102a) to which the housing part (106) of the first fuel cell unit (102b) that is provided with the ceramic coating (150) is brazed.

2. A gasket arrangement in accordance with Claim 1, **characterised in that** the housing part (106) of the first fuel cell unit (102b) comprises at least one fuel gas passage opening (122, 126).

3. A gasket arrangement in accordance with either of the Claims 1 or 2, **characterised in that** the housing part (106) of the first fuel cell unit (102b) comprises at least one oxidizing agent passage opening (124, 128).

4. A gasket arrangement in accordance with any of the Claims 1 to 3, **characterized in that** the housing part (106) of the first fuel cell unit (102b) comprises at least one passage opening (120) through which, in the assembled state of the fuel cell stack (100), a cathode electrolyte anode unit (108) of the first fuel cell unit (102b) is accessible for enabling electrical contact to be made by another fuel cell unit (102a) of the fuel cell stack (100).

5. A gasket arrangement in accordance with any of the Claims 1 to 4, **characterised in that** the housing part (106) of the first fuel cell unit (102b) is formed from a metal sheet.

6. A gasket arrangement in accordance with any of the Claims 1 to 5, **characterised in that** the housing part (106) of the first fuel cell unit (102b) is formed from a highly corrosion resistant steel.

7. A gasket arrangement in accordance with any of the Claims 1 to 6, **characterised in that** the ceramic coating (150) comprises aluminium oxide and/or titanium dioxide and/or zirconium dioxide and/or magnesium oxide.

8. A gasket arrangement in accordance with any of the Claims 1 to 7, **characterised in that** the ceramic coating (150) is produced by an atmospheric plasma spraying process, by a vacuum plasma spraying process or by a flame spraying process.

9. A gasket arrangement in accordance with any of the Claims 1 to 8, **characterised in that** the housing part (106) of the first fuel cell unit (102b) is formed from a metallic alloy which contains an oxidizable constituent.

10. A gasket arrangement in accordance with Claim 9, **characterised in that** the metallic alloy contains aluminium and/or zirconium as the oxidizable constituent.

11. A gasket arrangement in accordance with any of the Claims 1 to 10, **characterised in that** the ceramic coating (150) has a thickness of approximately 20 µm to approximately 1,000 µm.

12. A gasket arrangement in accordance with any of the Claims 1 to 11, **characterised in that** the silver based braze contains an additive of copper oxide.

13. A gasket arrangement in accordance with any of the Claims 1 to 12, **characterised in that** the housing part (106) of the first fuel cell unit (102b) is brazed to the housing part (112) of the second fuel cell unit (102a) by means of a silver based braze having a titanium additive.

14. A gasket arrangement in accordance with any of the Claims 1 to 13, **characterised in that** the housing part (106) of the first fuel cell unit (102b) that is provided with the ceramic coating (150) is welded and/or brazed to the second housing part (112) of the first fuel cell unit (102b).

15. A gasket arrangement in accordance with any of the Claims 1 to 14, **characterised in that** the second housing part (112) of the first fuel cell unit (102b) comprises at least one fuel gas passage opening (140, 144).

16. A gasket arrangement in accordance with any of the Claims 1 to 15, **characterised in that** the second housing part (112) of the first fuel cell unit (102b) comprises at least one oxidizing agent passage opening (142, 146).

17. A gasket arrangement in accordance with any of the Claims 1 to 16, **characterised in that** the second housing part (112) of the first fuel cell unit (102b) comprises at least one contact element for the purposes of making electrical contact with a neighbouring cathode electrolyte anode unit (108).

18. A method of manufacturing a fuel cell stack (100) which comprises a plurality of fuel cell units (102) that succeed one another in a stack direction (104), wherein each of the fuel cell units (102) comprises a housing (182) incorporating at least one housing part (106, 112) consisting of a metallic material, comprising the following process steps:
- preparing a housing part (106) of a first fuel cell unit (102b) from a metallic material which is provided with a coating (150) of a ceramic material;
- brazing the housing part (106) of the first fuel cell unit (102b) directly to a housing part (112) of a second fuel cell unit (102a) by means of a silver based braze without a copper additive at at least one position that is provided with the ceramic coating (150);
wherein the housing part (106) of the first fuel cell unit (102b) that is provided with the ceramic coating (150) is fixed to a second housing part (112) of the first fuel cell unit (102b), wherein the second housing part (112) of the first fuel cell unit (102b) has substantially the same shape as the housing part (112) of the second fuel cell unit (102a) to which the housing part (106) of the first fuel cell unit (102b) that is provided with the ceramic coating (150) is brazed, and
wherein the ceramic coating (150) is produced by a thermal spraying process.

19. A method in accordance with Claim 18, **characterised in that** the housing part (106) of the first fuel cell unit (102b) that is provided with the ceramic coating (150) is welded and/or brazed to a second housing part (106) of the first fuel cell unit (102b).

20. A method in accordance with either of Claims 18 or 19, **characterised in that** the ceramic coating (150) is produced by an atmospheric plasma spraying process, by a vacuum plasma spraying process or by a flame spraying process.

## Revendications

1. Système d'étanchéité pour un empilement de piles à combustibles (100), qui comporte plusieurs unités de piles à combustible (102) qui se suivent le long d'une direction d'empilement (104), chacune des unités de piles à combustible (102) comportant un boîtier (182) doté au moins d'une partie de boîtier (112) en matériau métallique,
**caractérisé en ce que**
- le système d'étanchéité comporte au moins une partie de boîtier (106) d'une première unité de piles à combustible (102b) en un matériau métallique, qui est pourvu d'un revêtement (150) en matériau céramique, le revêtement en céramique (150) étant obtenu par pulvérisation thermique,
- la partie de boîtier (106) de la première unité de piles à combustible (102b) étant brasée à au moins un endroit pourvu du revêtement en céramique (150) au moyen d'un matériau de brasage à base d'argent sans ajout de cuivre directement avec une partie de boîtier (112) d'une deuxième unité de piles à combustible (102a),
- la partie de boîtier (106) de la première unité de piles à combustible (102b) pourvue du revêtement en céramique (150) étant fixée à une deuxième partie de boîtier (112) de la première unité de piles à combustible (102b), et
- la deuxième partie de boîtier (112) de la première unité de piles à combustible (102b) présentant essentiellement la même configuration que la partie de boîtier (112) de la deuxième unité de piles à combustible (102a), avec laquelle la partie de boîtier (106) pourvue du revêtement en céramique (150) de la première unité de piles à combustible (102b) est brasée.

2. Système d'étanchéité selon la revendication 1, **caractérisé en ce que** la partie de boîtier (106) de la première unité de piles à combustible (102b) présente au moins une ouverture de passage pour le gaz combustible (122, 126).

3. Système d'étanchéité selon l'une quelconque des revendications 1 ou 2, **caractérisé en ce que** la partie de boîtier (106) de la première unité de piles à combustible (102b) présente au moins une ouverture de passage pour l'agent d'oxydation (124, 128).

4. Système d'étanchéité selon l'une quelconque des revendications 1 à 3, **caractérisé en ce que** la partie de boîtier (106) de la première unité de piles à combustible (102b) présente au moins une ouverture de passage (120), à travers laquelle, à l'état monté de l'empilement de piles à combustible (100), une unité anode-électrolyte-cathode (108) de la première unité de piles à combustible (102b) est accessible pour l'établissement d'un contact électrique grâce à une autre unité de piles à combustible (102a) de l'empilement de piles à combustible (100).

5. Système d'étanchéité selon l'une quelconque des revendications 1 à 4, **caractérisé en ce que** la partie de boîtier (106) de la première unité de piles à combustible (102b) est formée à partir d'une tôle métallique.

6. Système d'étanchéité selon l'une quelconque des revendications 1 à 5, **caractérisé en ce que** la partie de boîtier (106) de la première unité de piles à combustible (102b) est formée à partir d'un acier hautement résistant à la corrosion.

7. Système d'étanchéité selon l'une quelconque des revendications 1 à 6, **caractérisé en ce que** le revêtement en céramique (150) comporte de l'oxyde d'aluminium et/ou du dioxyde de titane et/ou du dioxyde de zirconium et/ou de l'oxyde de magnésium.

8. Système d'étanchéité selon l'une quelconque des revendications 1 à 7, **caractérisé en ce que** le revêtement en céramique (150) est obtenu par pulvérisation par plasma atmosphérique, par pulvérisation par plasma à vide ou par pistolage à la flamme.

9. Système d'étanchéité selon l'une quelconque des revendications 1 à 8, **caractérisé en ce que** la partie de boîtier (106) de la première unité de piles à combustible (102b) est formée à partir d'un alliage métallique, qui contient un composant oxydable.

10. Système d'étanchéité selon la revendication 9, **caractérisé en ce que** l'alliage métallique contient comme composant oxydable de l'aluminium et/ou du zirconium.

11. Système d'étanchéité selon l'une quelconque des revendications 1 à 10, **caractérisé en ce que** le revêtement en céramique (150) présente une épaisseur allant d'environ 20 µm à environ 1 000 µm.

12. Système d'étanchéité selon l'une quelconque des revendications 1 à 11, **caractérisé en ce que** le matériau de brasage à base d'argent contient un ajout d'oxyde de cuivre.

13. Système d'étanchéité selon l'une quelconque des revendications 1 à 12, **caractérisé en ce que** la partie de boîtier (106) de la première unité de piles à combustible (102b) est brasée avec la partie de boîtier (112) de la deuxième unité de piles à combustible (102a) au moyen d'un matériau de brasage à base d'argent avec un ajout de titane.

14. Système d'étanchéité selon la revendication 1 à 13, **caractérisé en ce que** la partie de boîtier (106) pourvue du revêtement en céramique (150) de la première unité de piles à combustible (102b) est soudée et/ou brasée avec la deuxième partie de boîtier (112) de la première unité de piles à combustible (102b).

15. Système d'étanchéité selon l'une quelconque des revendications 1 à 14, **caractérisé en ce que** la deuxième partie de boîtier (112) de la première unité de piles à combustible (102b) présente au moins une ouverture de passage pour le gaz combustible (140, 144).

16. Système d'étanchéité selon l'une quelconque des revendications 1 à 15, **caractérisé en ce que** la deuxième partie de boîtier (112) de la première unité de piles à combustible (102b) présente au moins une ouverture de passage pour un agent d'oxydation (142, 146).

17. Système d'étanchéité selon l'une quelconque des revendications 1 à 16, **caractérisé en ce que** la deuxième partie de boîtier (112) de la première unité de piles à combustible (102b) présente au moins un élément de contact servant à établir un contact électrique avec une unité voisine anode-électrolyte-cathode (108).

18. Procédé de fabrication d'un empilement de piles à combustible (100), qui comporte plusieurs unités de piles à combustible (102) lesquelles se suivent le long d'une direction d'empilement (104), chacune des unités de piles à combustible (102) comportant un boîtier (182) doté au moins d'une partie de boîtier (106, 112) en un matériau métallique, le procédé comportant les étapes suivantes consistant à :
- mettre à disposition une partie de boîtier (106) d'une première unité de piles à combustible (102b) en un matériau métallique, qui est pourvu d'un revêtement (150) en un matériau céramique ;
- braser la partie de boîtier (106) de la première unité de piles à combustible (102b) au niveau au moins d'un endroit pourvu du revêtement en céramique (150) au moyen d'un matériau de brasage à base d'argent sans ajout de cuivre directement avec une partie de boîtier (112) d'une deuxième unité de piles à combustible (102a)
✔ la partie de boîtier (106) pourvue du revêtement en céramique (150) de la première unité de piles à combustible (102b) étant fixée sur une deuxième partie de boîtier (112) de la première unité de piles à combustible (102b), la deuxième partie de boîtier (112) de la première unité de piles à combustible (102b) présentant essentiellement la même configuration que la partie de boîtier (112) de la deuxième unité de piles à combustible (102a) avec laquelle la partie de boîtier (106) pourvue du revêtement en céramique (150) de la première unité de piles à combustible (102b) est brasée, et
✔ le revêtement en céramique (150) étant obtenu par pulvérisation thermique.

19. Procédé selon la revendication 18, **caractérisé en ce que** la partie de boîtier (106) pourvue du revêtement en céramique (150) de la première unité de piles à combustible (102b) est soudée et/ou brasée avec une deuxième partie de boîtier (106) de la première unité de piles à combustible (102b).

20. Procédé selon l'une quelconque des revendications 18 ou 19, **caractérisé en ce que** le revêtement en céramique (150) est obtenu par pulvérisation par plasma atmosphérique, par pulvérisation par plasma à vide ou par pistolage à la flamme.
